# EUROPÄISCHE PATENTSCHRIFT

(11) **EP 1 293 705 B1**
(45) Veröffentlichungstag und Bekanntmachung des Hinweises auf die Patenterteilung: **13.10.2004**
(21) Anmeldenummer: 02018506.2
(22) Anmeldetag: 16.08.2002
(51) Int. Cl.: F16H 1/46, F16H 1/36

(54) **Planetengetriebe**
Planetary gearing
Engrenage planétaire

(30) Priorität: 12.09.2001 DE 10144805
(43) Veröffentlichungstag der Anmeldung: 19.03.2003
(73) Patentinhaber: ZF FRIEDRICHSHAFEN AG, 88038 Friedrichshafen (DE)
(72) Erfinder: Schulz, Horst, 88045 Friedrichshafen (DE); Kirschner, Tino, 88097 Eriskirch (DE)

(56) Entgegenhaltungen:
- WO-A-97/27410
- WO-A-98/51943
- GB-A- 204 589
- US-A- 3 120 764

## Beschreibung

Die Erfindung betrifft ein Planetengetriebe gemäß dem Oberbegriff des Hauptanspruchs.

Ein gattungsgemäßes Getriebe ist in der DE 197 20 255 A1 offenbart. Es zeichnet sich durch einen hohen Wirkungsgrad, geringes Verdrehspiel, hohe Übertragungstreue und eine geringe Geräuschentwicklung aus. Es sind hohe Übersetzungen bei einer hohen Leistungsdichte möglich.

Viele Aufgaben in der Antriebstechnik erfordern jedoch nicht eine derart hohe Übersetzung. Für viele Anwendungen in der Antriebstechnik sind Übersetzungen von 50 : 1 bis 80 : 1 ausreichend. Aufgrund von baulichen Gegebenheiten wird oftmals eine sehr kurze axiale Baulänge gewünscht. Weiterhin wird oft darüber hinaus die Möglichkeit gewünscht, Versorgungs- oder Steuerleitungen durch einen Zentraldurchlass im Getriebe hindurchzuleiten.

Der Erfindung liegt daher die Aufgabe zugrunde, ein Getriebe mit einfachem konstruktiven Aufbau anzugeben, das einfach montierbar ist, eine hohe Leistungsdichte sowie einen hohen Wirkungsgrad aufweist und axial kurzbauend ist. Es soll sich für eine Ausführung mit einem Zentraldurchlass eignen. Bei Getrieben mit Zentraldurchlass ist oftmals die maximal erreichbare Übersetzung aufgrund des größeren Durchmessers der Zentralräder kleiner als bei Getrieben ohne Zentraldurchlass. Das erfindungsgemäße Getriebe soll daher außerdem vorteilhaft kombinierbar sein mit einem Vorschaltgetriebe, um eine benötigte Gesamtübersetzung zu realisieren.

Diese Aufgabe wird durch ein Planetengetriebe mit den Merkmalen des Hauptanspruchs gelöst. Vorteilhafte Ausgestaltungen sind durch die Unteransprüche gegeben.

Durch ein Planetengetriebe mit den Merkmalen des Hauptanspruchs lassen sich Übersetzungen im Bereich von 50 : 1 bis 80 : 1 auf einfache Weise in einem extrem kurzen Bauraum realisieren. Die einzigen Bauteile, die noch relativ aufwendig in der Herstellung sind, sind die Stufenplaneten, da diese zwei verschiedene Verzahnungsbereiche aufweisen. Von diesen Stufenplaneten werden jedoch nur wenige, typischerweise zwei, benötigt. Alle anderen Bauteile - das Sonnenrad, das Hohlrad sowie insbesondere die ersten Planeten - sind sehr einfach herstellbar. Die beiden Stufenräder der Stufenplaneten weisen wesentlich unterschiedliche Durchmesser auf, so dass die Stufenplaneten bereits einen großen Teil zur Gesamtübersetzung des Planetengetriebes beitragen. Die Mittelachsen der Stufenplaneten sind gegenüber der Getriebehauptachse radial nach außen versetzt. Daher ist der Durchmesser der ersten Planeten in bestimmten Grenzen zur Anpassung der Gesamtübersetzung frei wählbar, wobei der Abstand der kleinen Stufenräder der Stufenplaneten und der ersten Planeten in Umfangsrichtung variiert wird.

In einer vorteilhaften Ausgestaltung der Erfindung ist das Hohlrad in einem wenigstens einseitig offenen, im wesentlichen zylindermantelförmigen Gehäuseteil angeordnet bzw. eingearbeitet. Die durch das Hohlrad gegebene Öffnung ist dabei so groß, dass der Planetenträger bei der Montage zusammen mit darin montierten ersten und Stufenplaneten einschiebbar ist. Hierdurch wird der Montageablauf wesentlich vereinfacht, da zunächst der Planetenträger mit den ersten und zweiten Planeten vormontiert werden kann, wobei die einzelnen Bauteile gut zugänglich sind.

In einer weiteren Ausgestaltung der Erfindung entspricht die Anzahl der Stufenplaneten, der halben Anzahl der ersten Planeten (mit durchgehender Verzahnung), wobei jeweils die kleinen Stufenräder der Stufenplaneten gleichzeitig mit einem Paar von benachbarten ersten Planeten in Eingriff stehen. Dies hat zur Folge, dass die auf die kleinen Stufenräder der Stufenplaneten wirkenden Verzahnungskräfte sich zumindest teilweise gegenseitig aufheben.

Die Erfindung sowie vorteilhafte Ausgestaltungen und Weiterbildungen werden anhand der beiliegenden Figuren näher erläutert, wobei
- Fig. 1: einen Längs-Schnitt durch eine Ausführungsform eines erfindungsgemäßen Planetengetriebes,
- Fig. 2: eine schematische Draufsicht auf die miteinander verzahnten Räder des Getriebes nach Fig. 1,
- Fig. 3: einen Längs-Schnitt durch eine Ausführungsform mit einer ersten Ausgestaltung eines Vorschaltgetriebes und
- Fig. 4: einen Längs-Schnitt durch eine Ausführungsform mit einer zweiten Ausgestaltung eines Vorschaltgetriebes
zeigen.

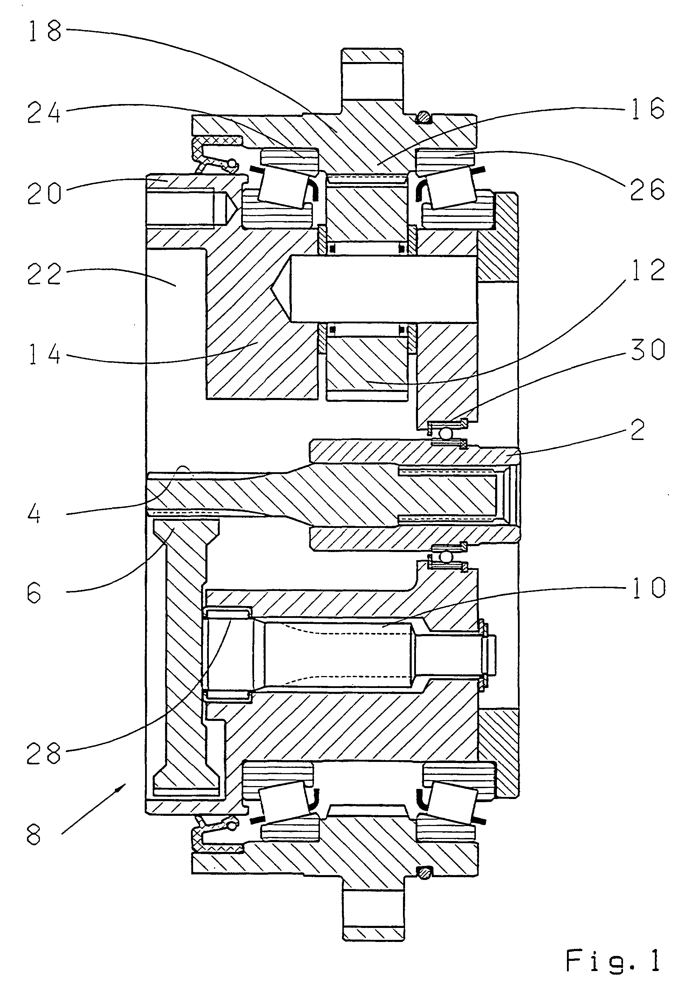

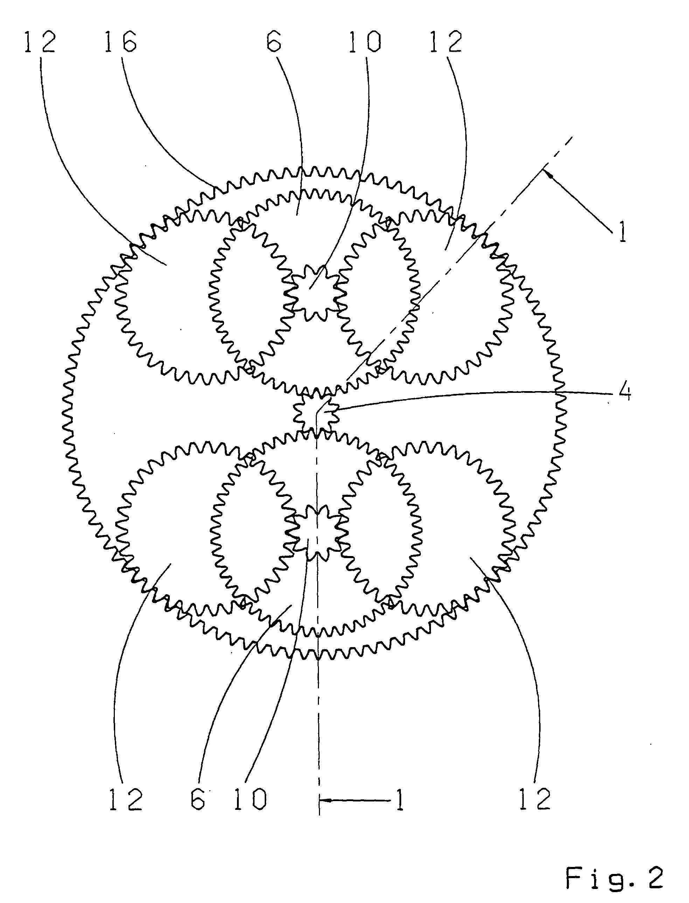

In Fig. 1 ist mit 2 eine Eingangswelle bezeichnet, die eine mit einer Formschlussverzahnung versehene Bohrung zur Aufnahme der Abtriebswelle eines nicht gezeigten Antriebsmotors aufweist. Das Sonnenrad 4 ist mit der Antriebswelle verbunden und auf der dem Motor abgewandten Seite in gleichzeitigem Zahneingriff mit zwei um 180° versetzten, großen Stufenrädern 6 von Stufenplaneten 8. Von den beiden sich gegenüberliegenden Stufenplaneten 8 ist in Fig. 1 nur einer zu sehen, da ein Schnitt-Verlauf, wie aus Fig. 2 ersichtlich, gezeigt ist.

Die Stufenplaneten 8 weisen außerdem kleine Stufenräder 10 auf, die mit einem Paar von benachbarten ersten Planeten 12 in Eingriff stehen. Die Stufenplaneten 8 und die ersten Planeten 12 sind gemeinsam in einem Planetenträger 14 gelagert, der den Abtrieb bildet. Die ersten Planeten 12 weisen jeweils genau eine durchgehende Verzahnung auf, welche gleichzeitig mit einem kleinen Stufenrad 10 eines Stufenplaneten und dem Hohlrad 16 im Eingriff steht. Die Verzahnung der ersten Planeten 12 mit dem Hohlrad 16 und den kleinen Stufenrädern 10 der Stufenplaneten 8 liegt in der selben Axialebene, wodurch eine kurze axiale Bauform erzielt wird.

Das Hohlrad 16 ist in einem im wesentlichen zylindermantelförmigen Gehäuseteil 18 eingearbeitet, in welches der Planetenträger 14 bei der Montage zusammen mit den darin montierten Planeten 8, 12 einschiebbar ist.

Auf der dem Antriebsmotor abgewandten Seite weist der Planetenträger 14 einen Abtriebsflansch 20 auf. In den Abtriebsflansch 20 sind einseitig offene Vertiefungen 22 eingearbeitet, welche die großen Stufenräder 6 der Stufenplaneten 8 aufnehmen. An dieser Stelle sind die großen Stufenräder maximal entfernt vom Antriebsmotor angeordnet, woraus einige Vorteile resultieren:

In der Zeichnung links von der Verzahnungsebene der Stufenplaneten sind außer einem nicht gezeigten dünnen Deckel keine Funktionselemente des Getriebes mehr vorhanden, was sich sehr günstig auf die axiale Baulänge auswirkt. An dieser Stelle können die großen Stufenräder außerdem mit einem relativ großen Durchmesser ausgeführt werden, ohne dass sie in Konflikt mit der Planetenträgerlagerung oder dem Hohlrad geraten.

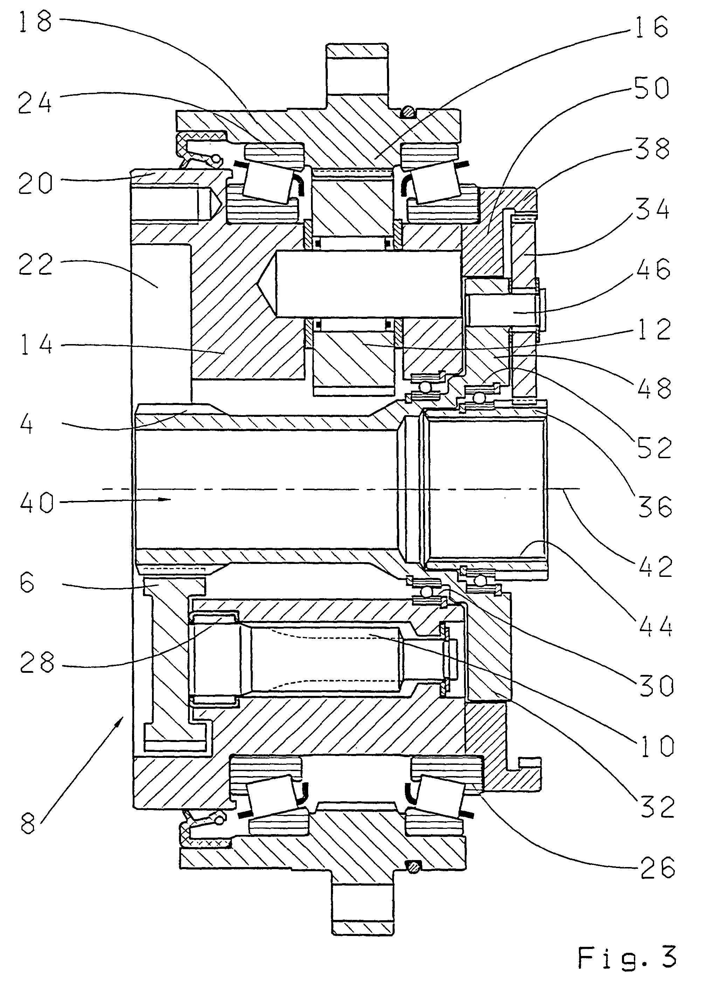

Hierdurch wird ferner eine kompakte und dennoch sehr tragfähige Lagerung des Planetenträgers 14 im Gehäuse 18 ermöglicht, bei welcher zwei als Kegelrollenlager ausgebildete Schräglager 24, 26 eine O-Anordnung bilden und beidseits des Verzahnungsbereichs des Hohlrads 16 angeordnet sind, wobei das dem Antriebsmotor abgewandte Lager 24 axial zwischen dem Verzahnungsbereich des Hohlrads 16 und dem Verzahnungsbereich der großen Stufenräder 6 der Stufenplaneten 8 angeordnet ist. Bei dieser Anordnung ist der Hüllkreis um die großen Stufenräder 6 der Stufenplaneten 8 nicht durch die Planetenträgerlager 24, 26 begrenzt, so dass große Stufenräder und eine dementsprechend hohe Übersetzung ermöglicht werden. Bei einer Ausgestaltung mit einem Zentraldurchlass (siehe Fig. 3) ist es hierdurch möglich, die Stufenplaneten radial weit nach außen zu versetzen.

Die hohe Übertragungstreue, Leistungsdichte und Unempfindlichkeit gegenüber Fertigungsungenauigkeiten beruht darauf, dass sowohl das Sonnenrad 4 in den Verzahnungen mit den großen Stufenrädern 6 der Stufenplaneten als auch die kleinen Stufenräder 10 der Stufenplaneten 8 in den Verzahnungen mit den Planeten 12 fliegend gelagert sind und sich ihre jeweils für einen Lastausgleich erforderliche Position selbst suchen. Die Lagerung des Sonnenrads 4 und der Stufenplaneten 8 ist dabei jeweils durch ein einziges Lager gegeben, das axial entfernt von der jeweiligen Verzahnung angeordnet ist. Die Lagerungen sind in dem Maße winkelbeweglich, wie es für die Radialbewegung des Räder notwendig ist.

Jeder Stufenplanet 8 ist also durch ein im Bereich des großen Stufenrads 6 angeordnetes Lager 28 im Planetenträger 14 gelagert. Das Sonnenrad 4 bzw. die Sonnenradwelle 2 ist auf der dem Antriebsmotor zugewandten Seite durch das Lager 30 im Planetenträger 14 gelagert.

Aus Fig. 2 ist der Schnitt-Verlauf der Schnitt-Darstellung gemäß Fig. 1 sowie die Anordnung der Zahnräder, die mit den gleichen Bezugszeichen wie in Fig. 1 versehen sind, ersichtlich.

Das erfindungsgemäße Planetengetriebe läßt sich besonders vorteilhaft mit einer Vorübersetzungsstufe kombinieren, welche trieblich zwischen dem Sonnenrad 4 des Planetengetriebes, welches als Hauptübersetzungsstufe dient, und dem Antriebsmotor angeordnet ist. Die Ergänzung mit einer Vorübersetzungsstufe ist insbesondere dann notwendig, wenn höhere Gesamtübersetzungen gefordert sind und/oder das Getriebe einen Zentraldurchlass aufweisen muß, der bedingt, dass das Sonnenrad einen größeren Durchmesser hat, wodurch die Übersetzung der Hauptübersetzungsstufe begrenzt ist.

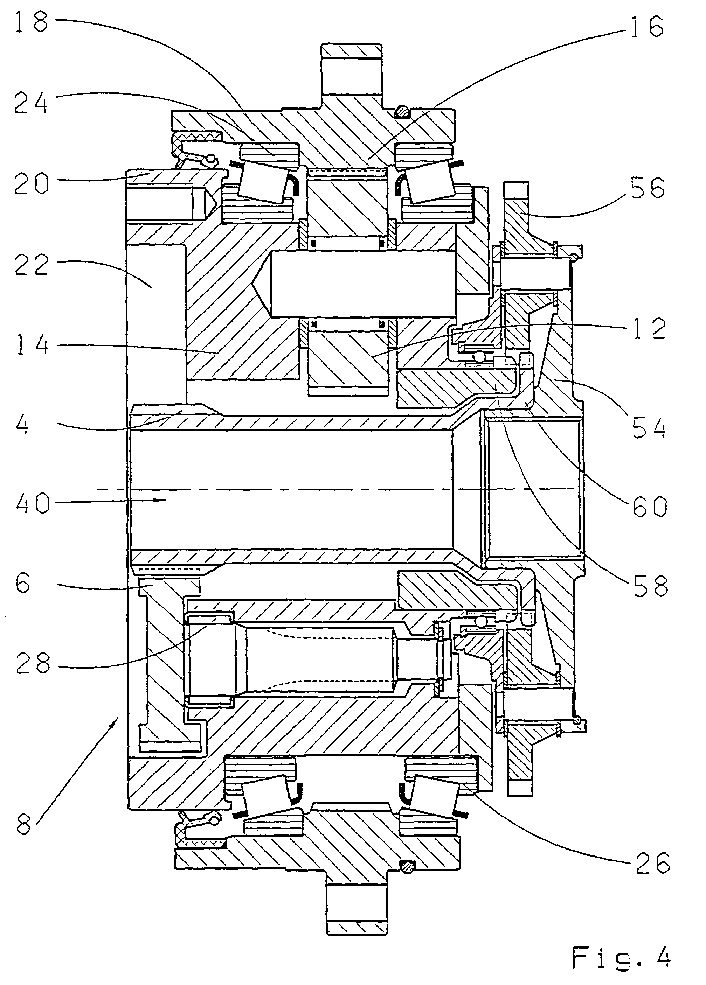

Fig. 3 und Fig. 4 zeigen zwei Weiterbildungen des erfindungsgemäßen Planetengetriebes, welche sowohl einen Zenraldurchlass als auch eine Vorübersetzungsstufe aufweisen.

Bei der Ausführungsform gemäß Fig. 3 sind sämtliche Elemente der Hauptübersetzungsstufe mit den selben Bezugszeichen wie in Fig. 1 versehen. Das Sonnenrad 4 der Hauptübersetzungsstufe ist einstückig mit einem Planetenträger 32 der Vorübersetzungsstufe ausgebildet. Zur Lagerung des Sonnenrads 4 und des daran angeformten Planetenträgers 32 dient wiederum ein einziges Lager 30, welches axial entfernt vom Sonnenrad 4 der Hauptübersetzungsstufe angeordnet ist, so dass eine Radialbewegung des Sonnenrads 4 ermöglicht wird. Auf dem Planetenträger 32 der Vorübersetzungsstufe sind mehrere Planeten 34 drehbar gelagert, welche in gleichzeitigem Zahneingriff mit einem zentralen Antriebsritzel 36, das mit dem Antriebsmotor koppelbar ist, und einem Hohlrad 38 ist. Das Hohlrad 38 ist nicht im Gehäuse 18 des Getriebes angeordnet, sondern ist mit dem Planetenträger 14 der Hauptübersetzungsstufe verbunden. Die Vorteile des hierdurch gegebenen Räderschemas liegen nicht nur in der äußerst kompakten räumlichen Anordnung, sondern in der hohen Gesamtübersetzung des Gesamtgetriebes, die größer ist als das Produkt der Übersetzungen von Hauptübersetzungsstufe und Vorübersetzungsstufe.

Bei der Hauptübersetzungsstufe erfolgt zwischen dem angetriebenen Sonnenrad 4 und dem Planetenträger 14, der den Abtrieb bildet, eine Drehrichtungsumkehr. Das Hohlrad 38 der Vorübersetzungsstufe rotiert also mit dem Planetenträger 14 in entgegengesetzter Richtung wie das Sonnenrad 4 und das zentrale Antriebsritzel 36. Dies bewirkt, dass der Planetenträger 32 der Vorübersetzungsstufe langsamer rotiert, als wenn das Hohlrad 38 der Vorübersetzungsstufe gehäusefest angeordnet wäre. Dieser Gewinn an Gesamtübersetzungsverhältnis wirkt sich insbesondere dann vorteilhaft aus, wenn aufgrund eines geforderten großen Zentraldurchlass die Übersetzung der Hauptübersetzungsstufe, bedingt durch ein großes Sonnenrad, begrenzt ist. Es ist also eine wesentliche Eigenschaft der Hauptübersetzungsstufe, dass eine Drehrichtungsumkehr zwischen angetriebenem Sonnenrad 4 und dem Planetenträger 14, der den Abtrieb bildet, vorliegt.

Das in Fig. 3 gezeigte Getriebe weist einen durchgehenden Zentraldurchlass 40 entlang der Hauptachse des Getriebes 42 auf. Sowohl das Sonnenrad 40 als auch das zentrale Antriebsritzel 36 der Vorübersetzungsstufe sind als Hohlwellen ausgebildet. Eine axial kurze Baulänge bei angebautem Antriebsmotor wird dadurch erzielt, dass das zentrale Antriebsritzel 36 außer seiner äußeren Laufverzahnung, welcher im Eingriff mit den Planeten 34 der Vorübersetzungsstufe ist, auf der Innenseite ein Formschlussprofil 44 zur Koppelung mit dem Antriebsmotor aufweist. Hierbei nehmen die Laufverzahnung und das Formschlussprofil 44 zumindest teilweise den selben axialen Bauraum ein.

Die Planeten 34 der Vorübersetzungsstufe sind auf Planetenbolzen 46 gelagert, welche zur Seite des Antriebsmotors auskragend in einem Flansch 48 des Planetenträgers 32 eingepreßt sind. Im selben axialen Bauraum wie der Flansch 48, in dem die Planetenbolzen 46 sitzen, ist radial außerhalb ein Haltering 50 für das dem Antriebsmotor zugewandte Lager 26 angeordnet.

Radial innerhalb des Flansches 48 des Planetenträgers 32 der Vorübersetzungsstufe ist zwischen einer Innenzylindermantelfläche des Flansches 48 und dem Antriebsritzel 36 der Vorübersetzungsstufe ein Lager 52 angeordnet. Im selben axialen Bauraum sind also sowohl der Flansch 48, das Lager 52 als auch der Haltering 50 untergebracht. Der Haltering 50 weist eine Innenverzahnung auf, welche das Hohlrad 38 der Vorübersetzungsstufe bildet.

In Fig. 4 sind wiederum die selben Bezugszeichen wie in den vorausgegangenen Figuren verwendet. Die Vorübersetzungsstufe der in Fig. 4 gezeigten Ausführungsform weist einen mit dem Antriebsmotor koppelbaren Planetenträger 54 auf, auf dem mehrere Planeten 56 drehbar gelagert sind. Die Planeten 56 sind in gleichzeitigem Zahneingriff mit zwei axial benachbart angeordneten Sonnenrädern 58, 60, die einen geringen, durch die Anzahl der Planetenräder 56 teilbaren Zähnezahlunterschied aufweisen. Das erste Sonnenrad 58 ist mit dem Planetenträger 32 der Hauptübersetzungsstufe und das zweite Sonnenrad 60 mit dem Sonnenrad 4 der Hauptübersetzungsstufe gekoppelt. Diese auch als Wolfrom-Trieb bezeichnete Vorübersetzungsstufe weist bereits eine hohe Übersetzung auf und bietet günstige Voraussetzungen für einen Zentraldurchlass 40. Die beiden Zentralräder 58, 60 könnten auch als Hohlräder ausgebildet sein.

Besonders einfach läßt sich der Wolfrom-Trieb realisieren, wenn die Planeten 56 der Vorübersetzungsstufe eine durchgehende Verzahnung aufweisen. Zur Korrektur des aus dem Zähnezahlunterschied herrührenden Eingriffswinkelunterschied weist mindestens eines der beiden Sonnenräder 58, 60 eine entsprechende Profilverschiebung auf.

Die maximale Übersetzung des Gesamtgetriebes wird erreicht, wenn das erste Sonnenrad 58 eine kleinere Zähnezahl aufweist als das zweite Sonnenrad 60.

### Bezugszeichen

- 2: Antriebswelle
- 4: Sonnenrad
- 6: Stufenrad
- 8: Stufenplanet
- 10: Stufenrad
- 12: Planet
- 14: Planetenträger
- 16: Hohlrad
- 18: Gehäuse
- 20: Flansch
- 22: Vertiefung
- 24: Lager
- 26: Lager
- 28: Lager
- 30: Lager
- 32: Planetenträger
- 34: Planet
- 36: Antriebsritzel
- 38: Hohlrad
- 40: Zentraldurchlass
- 42: Getriebehauptachse
- 44: Formschlussverzahnung
- 46: Planetenbolzen
- 48: Flansch
- 50: Haltering
- 52: Lager
- 54: Planetenträger
- 56: Planet
- 58: Sonnenrad
- 60: Sonnenrad

## Patentansprüche

1. Planetengetriebe mit einem von einem Antriebsmotor antreibbaren Sonnenrad (4), genau einem in einem Gehäuse (18) angeordneten Hohlrad (16), einer Gruppe von ersten Planeten (12) und einer Gruppe von Stufenplaneten (8), wobei alle Planeten (8, 12) in einem, den Abtrieb bildendengemeinsamen Planetenträger (14) gelagert sind, die Stufenplaneten (8) mit kleinen (10) und großen Stufenrädern (6) ausgebildet sind und die großen Stufenräder (6) der Stufenplaneten (8) mit dem Sonnenrad (4) in Eingriff stehen, **dadurch gekennzeichnet, dass** jeder der ersten Planeten (12) genau eine, vorzugsweise durchgehende Verzahnung aufweist, welche gleichzeitig mit dem Hohlrad (16) und einem kleinen Stufenrad (10) der Stufenplaneten (8) in Eingriff steht.

2. Planetengetriebe nach Anspruch 1, **dadurch gekennzeichnet, dass** das Hohlrad (16) in einem wenigstens einseitig offenen, im wesentlichen zylindermantelförmigen Gehäuseteil (18) angeordnet bzw. eingearbeitet ist, in welches der Planetenträger (14) bei der Montage zusammen mit darin montierten ersten und zweiten Planeten einschiebbar ist.

3. Planetengetriebe nach Anspruch 1 oder 2, **dadurch gekennzeichnet, dass** die Anzahl der zweiten Planeten (8) der halben Anzahl der ersten Planeten (12) entspricht, und dass die kleinen Stufenräder (10) der Stufenplaneten (8) gleichzeitig mit einem Paar von benachbarten ersten Planeten (12) in Eingriff stehen.

4. Planetengetriebe nach einem der Ansprüche 1 bis 3, **dadurch gekennzeichnet, dass** der Planetenträger (14) auf der dem Antriebsmotor abgewandten Seite einen Abtriebsflansch (20) mit einseitig offenen Vertiefungen (22) aufweist, welche die großen Stufenräder (6) der Stufenplaneten (8) aufnehmen.

5. Planetengetriebe nach einem der Ansprüche 2 bis 4, **dadurch gekennzeichnet, dass** zur Lagerung des Planetenträgers (14) in dem das Hohlrad (16) aufweisenden Gehäuseteil (18) zwei Lager (24, 26) vorgesehen sind, welche beidseits des Verzahnungsbereichs des Hohlrads (16) angeordnet sind, wobei das dem Antriebsmotor abgewandte Lager (24) axial zwischen dem Verzahnungsbereich des Hohlrads (16) und dem Verzahnungsbereich der großen Stufenräder (6) der Stufenplaneten (8) angeordnet ist.

6. Planetengetriebe nach Anspruch 5, **dadurch gekennzeichnet, dass** die beiden Lager (24, 26) als Schräglager ausgebildet sind und eine O-Lageranordnung bilden.

7. Planetengetriebe nach einem der Ansprüche 1 bis 6, **dadurch gekennzeichnet, dass** jeder Stufenplanet (8) durch ein im Bereich des großen Stufenrads (6) angeordnetes Lager (28) im Planetenträger gelagert ist.

8. Planetengetriebe nach einem der Ansprüche 1 bis 7, **dadurch gekennzeichnet, dass** das Planetengetriebe entlang einer Getriebehauptachse (42) einen Zentraldurchlass (40) aufweist.

9. Planetengetriebe nach einem der Ansprüche 1 bis 8, **dadurch gekennzeichnet, dass** es neben einer Hauptübersetzungsstufe (4, 6, 10, 12, 14, 16) eine Vorübersetzungsstufe aufweist, welche trieblich zwischen dem Sonnenrad (4) der Hauptübersetzungsstufe und dem Antriebsmotor angeordnet ist.

10. Planetengetriebe nach Anspruch 9, **dadurch gekennzeichnet, dass** das Sonnenrad (4) der Hauptübersetzungsstufe drehstarr mit einem Planetenträger (32) der Vorübersetzungsstufe gekoppelt ist, auf dem Planeten (34) der Vorübersetzungsstufe angeordnet sind, die in ständigem Zahneingriff mit einem dem Planetenträger (14) der Hauptübersetzungsstufe zugeordneten Hohlrad (38) und einem mit dem Antriebsmotor koppelbaren zentralen Antriebsritzel (36) sind.

11. Planetengetriebe nach Anspruch 10, **dadurch gekennzeichnet, dass** das Sonnenrad (4) der Hauptübersetzungsstufe und der damit verbundene Planetenträger (32) der Vorübersetzungsstufe durch ein einziges Lager (30) im Planetenträger (14) der Hauptübersetzungsstufe gelagert sind, welches axial entfernt von dem Sonnenrad (4) der Hauptübersetzungsstufe angeordnet ist.

12. Planetengetriebe nach einem der Ansprüche 10 oder 11, **dadurch gekennzeichnet, dass** das zentrale Antriebsritzel (36) der Vorübersetzungsstufe als Hohlwelle ausgebildet ist, und außer einer äußeren Laufverzahnung, welche im Eingriff mit den Planeten (34) der Vorübersetzungsstufe ist, auf der Innenseite ein Formschlussprofil (44) zur Koppelung mit dem Antriebsmotor aufweist, wobei die Laufverzahnung und das Formschlussprofil (44) zumindest teilweise den selben axialen Bauraum einnehmen.

13. Planetengetriebe nach einem der Ansprüche 10 bis 12, **dadurch gekennzeichnet, dass** die Planeten (34) der Vorübersetzungsstufe auf Planetenbolzen (46) gelagert sind, welche zur Seite des Antriebsmotors auskragend in einem Flansch (48) des Planetenträgers sitzen, und dass der Flansch (48) des Planetenträgers (32) zumindest teilweise den selben axialen Bauraum einnimmt wie ein radial außerhalb des Flansches angeordneter Haltering (50) für das dem Antriebsmotor zugewandte Lager (26), welches zwischen dem das Hohlrad (16) der Hauptübersetzungsstufe aufweisenden Gehäuseteil (18) und dem Planetenträger (14) der Hauptübersetzungsstufe angeordnet ist.

14. Planetengetriebe nach Anspruch 13, **dadurch gekennzeichnet, dass** der Haltering (50) eine Innenverzahnung aufweist, welche das Hohlrad (38) der Vorübersetzungsstufe bildet.

15. Planetengetriebe nach Anspruch 13 oder 14, **dadurch gekennzeichnet, dass** zwischen einer Innenzylindermantelfläche des Flansches (48) und dem Antriebsritzel (36) der Vorübersetzungsstufe ein Lager (52) angeordnet ist, welches zumindest teilweise den selben axialen Bauraum einnimmt wie der Flansch und/oder der Haltering (50).

16. Planetengetriebe nach Anspruch 9, **dadurch gekennzeichnet, dass** die Vorübersetzungsstufe einen mit dem Antriebsmotor koppelbaren Planetenträger (54) aufweist, auf dem mehrere Planeten (56) drehbar gelagert sind, die in gleichzeitigem Zahneingriff mit zwei axial benachbart angeordneten Zentralrädern (58, 60) sind, von denen das erste (58) mit dem Planetenträger (14) der Hauptübersetzungsstufe und das zweite (60) mit dem Sonnenrad (4) der Hauptübersetzungsstufe gekoppelt ist.

17. Planetengetriebe nach Anspruch 16, **dadurch gekennzeichnet, dass** die Zentralräder als Sonnenräder (58, 60) mit Außenverzahnung ausgebildet sind.

18. Planetengetriebe nach Anspruch 16 oder 17, **dadurch gekennzeichnet, dass** die Planeten (56) der Vorübersetzungsstufe eine durchgehende Verzahnung aufweisen, und dass die Verzahnung mindestens eines der Zentralräder (58, 60) Profilverschiebung aufweist, um den Zähnezahlunterschied auszugleichen.

19. Planetengetriebe nach einem der Ansprüche 16 bis 18, **dadurch gekennzeichnet, dass** das erste Zentralrad (58) eine kleinere Zähnezahl aufweist als das zweite Zentralrad (60).

## Claims

1. Planetary transmission with a sun gear (4) which is driveable by a drive motor, a ring gear (16) arranged in a housing (18), a set of first planets (12) and a set of stepped planet gears (8), with all planets (8, 12) being supported in one planet carrier (14) constituting the output, the stepped planet gears (8) featuring small (10) and big stepped gears (6), and with the big stepped gears (6) of the stepped planet gears (8) meshing with the sun gear (4), **characterized in that** each one of the first planets (12) features precisely one, preferably continuous, gearing, which simultaneously meshes with the ring gear (16) and a small stepped gear (10) of the stepped planet gears (8).

2. Planetary transmission according to claim 1, **characterized in that** the ring gear (16) is arranged in an at least unilaterally open, largely cylindrically shaped housing part (18), into which during assembly the planet carrier (14) can be inserted together with first and second planets mounted inside.

3. Planetary transmission according to claim 1 or 2, **characterized in that** the number of second planets (8) is equivalent to half the number of first planets (12) and that the small stepped gears (10) of the stepped planet gears (8) simultaneously mesh with a pair of neighboring first planets (12).

4. Planetary transmission according to one of the claims 1 through 3, **characterized in that** the planet carrier (14) on its side not facing the drive motor features an output flange (20) with unilaterally open recesses (22) to receive the big stepped gears (6) of the stepped planet gears (8).

5. Planetary transmission according to one of the claims 2 through 4, **characterized in that** two bearings (24, 26) supporting the planet carrier (14) are provided in the housing part (18) accommodating the ring gear (16), which are arranged on both sides of the gearing area of the ring gear (16), with the bearing (24) not facing the drive motor being arranged axially between the gearing area of the ring gear (16) and the gearing area of the big stepped gears (6) of the stepped planet gears (8).

6. Planetary transmission according to claim 5, **characterized in that** the two bearings (24, 26) are designed as angular contact bearings and constitute an O-bearing arrangement.

7. Planetary transmission according to one of the claims 1 through 6, **characterized in that** each stepped planet gear (8) is supported in the planet carrier by means of a bearing (28) arranged in the area of the big stepped gear (6).

8. Planetary transmission according to one of the claims 1 through 7, **characterized in that** the planetary transmission features a central passage (40) alongside a transmission main axis (42).

9. Planetary transmission according to one of the claims 1 through 8, **characterized in that** in addition to a main gear (4, 6, 10, 12, 14, 16) it features a preliminary gear, which in the driveline is arranged between the sun gear (4) of the main gear and the drive motor.

10. Planetary transmission according to claim 9, **characterized in that** the sun gear (4) of the main gear is nonrotationally linked to a planet carrier (32) of the preliminary gear, on which planets (34) of the preliminary gear are arranged, which constantly mesh with a ring gear (38) assigned to the planet carrier (14) of the main gear and with a central drive pinion (36) that can be coupled to the drive motor.

11. Planetary transmission according to claim 10, **characterized in that** the sun gear (4) of the main gear and the planet carrier (32) of the preliminary gear linked to it are supported by a single bearing (30) in the planet carrier (14) of the main gear, which is arranged at an axial distance from the sun gear (4) of the main gear.

12. Planetary transmission according to one of the claims 10 or 11, **characterized in that** the central drive pinion (36) of the preliminary gear is designed as a hollow shaft and in addition to outer running gears, which mesh with the planets (34) of the preliminary gear, features a positive-engagement profile (44) on the inside to link it to the drive motor, with the running gears and the positive-engagement profile (44) at least partially occupying the same axial space.

13. Planetary transmission according to one of the claims 10 through 12, **characterized in that** the planets (34) of the preliminary gear are supported by planetary bolts (46), which laterally to the drive motor project from a flange (48) of the planet carrier (32), and that the flange (48) of the planet carrier (32) at least partially occupies the same axial space as a fastening ring (50), which is arranged radially outside the flange, for the bearing (26) which faces the drive motor and which is arranged between the housing part (18) accommodating the ring gear (16) of the main gear and the planet carrier (14) of the main gear.

14. Planetary transmission according to claim 13, **characterized in that** the fastening ring (50) features internal teeth constituting the ring gear (38) of the preliminary gear.

15. Planetary transmission according to claim 13 or 14, **characterized in that** between a cylinder internal surface area of the flange (48) and the drive pinion (36) of the preliminary gear there is a bearing (52) which occupies at least partially the same axial space as the flange and/or the fastening ring (50).

16. Planetary transmission according to claim 9, **characterized in that** the preliminary gear features a planet carrier (54) which can be linked to the drive motor and on which there are several bearing-supported planets (56), which simultaneously mesh with two axially neighboring center gears (58, 60), of which the first (58) is linked to the planet carrier (14) of the main gear and the second (60) to the sun gear (4) of the main gear.

17. Planetary transmission according to claim 16, **characterized in that** the center gears are designed as sun gears (58, 60) with external teeth.

18. Planetary transmission according to claim 16 or 17, **characterized in that** the planets (56) of the preliminary gear feature continuous teething and that the teething of at least one of the center gears (58, 60) features addendum correction to equalize the difference in the number of teeth.

19. Planetary transmission according to one of the claims 16 through 18, **characterized in that** the first center gear (58) has fewer teeth than the second center gear (60).

## Revendications

1. Boîte épicycloïdale dotée d'un pignon planétaire (4) pouvant être entraîné par un moteur d'entraînement, d'exactement une couronne (16) disposée dans un carter (18), d'un groupe de premiers satellites (12) et d'un groupe de satellites étagés (8), sachant que tous les satellites (8, 12) sont logés dans un porte-satellites (14) commun et formant la sortie, et sachant que les satellites étagés (8) comportent des pignons étagés petits (10) et des pignons étagés grands (6) et que les grands pignons étagés (6) des satellites étagés (8) engrènent avec le pignon planétaire (4), **caractérisé en ce que** chacun des premiers satellites (12) comporte exactement une denture, de préférence complète, laquelle engrène simultanément avec la couronne (16) et un petit pignon étagé (10) des satellites étagés (8).

2. Boîte épicycloïdale selon la revendication 1, **caractérisée en ce que** la couronne (16) est disposée ou réalisée dans un demi-carter (18) essentiellement en forme de corps cylindrique, dans lequel le porte-satellites (14) peut être inséré lors du montage ensemble avec les premiers et deuxièmes satellites y montés.

3. Boîte épicycloïdale selon une des revendications 1 ou 2, **caractérisée en ce que** le nombre des deuxièmes satellites (8) correspond à la moitié du nombre des premiers satellites (12) et **en ce que** les petits pignons étagés (10) des satellites étagés (8) engrènent simultanément avec un couple de premiers satellites (12) adjacents.

4. Boîte épicycloïdale selon une des revendications 1 à 3, **caractérisée en ce que** le porte-satellites (14) comporte du côté opposé au moteur d'entraînement une bride de sortie (20) avec des évidements ouverts d'un côté (22) dans lesquels sont logés les grands pignons étagés (6) des satellites étagés (8).

5. Boîte épicycloïdale selon une des revendications 2 à 4, **caractérisée en ce que** pour le logement du porte-satellites (14) sont prévus, dans le demi-carter (18) comportant une couronne (16), deux roulements (24, 26) disposés des deux côtés de la zone dentée de la couronne (16), sachant que le roulement (24) étant du côté opposé au moteur d'entraînement est disposé axialement entre la zone dentée de la couronne (16) et la zone dentée des grands pignons étagés (6) des satellites étagés (8).

6. Boîte épicycloïdale selon une la revendication 5, **caractérisée en ce que** les deux roulements (24, 26) sont des roulements à contact oblique dont la disposition est en forme de « O ».

7. Boîte épicycloïdale selon une des revendications 1 à 6, **caractérisée en ce que** chacun des satellites étagés (8) est logé - grâce à un roulement (28) disposé dans la zone du grand pignon étagé (6) - dans le porte-satellites.

8. Boîte épicycloïdale selon une des revendications 1 à 7, **caractérisée en ce que** la boîte épicycloïdale comporte, suivant l'axe principal de la boîte de vitesses (42), un passage central (40).

9. Boîte épicycloïdale selon une des revendications 1 à 8, **caractérisée en ce que** celle-ci comporte, à part un étage de réduction principal (4, 6, 10, 12, 14, 16), un étage de réduction monté en amont, celui-ci étant disposé, en termes de transmission de couple, entre le pignon planétaire (4) de l'étage de réduction principal et le moteur d'entraînement

10. Boîte épicycloïdale selon la revendication 9, **caractérisée en ce que** le pignon planétaire (4) de l'étage de réduction principal est couplé et solidaire en rotation avec un des porte-satellites (32) de l'étage de réduction monté en amont, **en ce que** sur ce porte-satellites (32) sont disposés des satellites (34) de l'étage de réduction monté en amont, lesquels sont en prise permanente avec une couronne (38) associée au porte-satellites (14) de l'étage de réduction principal et avec le pignon menant central (36) qui peut être couplé avec le moteur d'entraînement.

11. Boîte épicycloïdale selon la revendication 10, **caractérisée en ce que** le pignon planétaire (4) de l'étage de réduction principal et le porte-satellites (32) de l'étage de réduction monté en amont et lié à celui-ci sont logés grâce à un seul roulement (30) situé dans le porte-satellites (14) de l'étage de réduction principal, ce roulement étant monté dans un endroit éloigné axialement du pignon planétaire (4) de l'étage de réduction principal.

12. Boîte épicycloïdale selon une des revendications 10 à 11, **caractérisée en ce que** le pignon menant central (36) de l'étage de réduction monté en amont est réalisé comme arbre creux, et **en ce qu'**il comporte - à part une denture d'engrènement extérieure, étant en prise avec les satellites (34) de l'étage de réduction monté en amont - sur la face intérieure un profil craboté (44) pour le couplage avec le moteur d'entraînement, sachant que la denture d'engrènement et le profil craboté (44) occupent au moins partiellement le même espace d'encombrement axial.

13. Boîte épicycloïdale selon une des revendications 10 à 12, **caractérisée en ce que** les satellites (34) de l'étage de réduction monté en amont sont logés sur des axes de satellites (46), lesquels se trouvent, du côté moteur d'entraînement et en saillie, dans une bride (48) du porte-satellites, et **en ce que** la bride (48) du porte-satellites (32) occupe, au moins partiellement, le même espace d'encombrement axial qu'une bague de retenue (50) du roulement (26) tourné vers le moteur d'entraînement, ce roulement se trouvant radialement en dehors de la bride et lequel est disposé entre le demi-carter (18) comportant la couronne (16) de l'étage de réduction principal et le porte-satellites (14) de l'étage de réduction principal.

14. Boîte épicycloïdale selon la revendication 13, **caractérisée en ce que** la bague de retenue (50) comporte une denture intérieure, formant la couronne (38) de l'étage de réduction monté en amont.

15. Boîte épicycloïdale selon une des revendications 13 ou 14, **caractérisée en ce que** entre une surface intérieure en forme de corps de cylindre de la bride (48) et le pignon menant (36) de l'étage de réduction monté en amont est disposé un roulement (52), lequel occupe au moins partiellement le même espace d'encombrement axial que la bride et/ou la bague de retenue (50).

16. Boîte épicycloïdale selon la revendication 9, **caractérisée en ce que** l'étage de réduction monté en amont comporte un porte-satellites (54) couplable avec le moteur d'entraînement, sur lequel sont logés plusieurs satellites (56) pivotants, lesquels se trouvent en prise simultanée avec deux pignons centraux (58, 60) disposés axialement et étant juxtaposés, dont le premier (58) est couplé avec le porte-satellites (14) de l'étage de réduction principal et le deuxième (60) avec le pignon planétaire (4) de l'étage de réduction principal.

17. Boîte épicycloïdale selon la revendication 16, **caractérisée en ce que** les pignons centraux sont réalisés comme des pignons planétaires (58, 60) dotés d'une denture extérieure.

18. Boîte épicycloïdale selon une des revendications 16 ou 17, **caractérisée en ce que** les satellites (56) de l'étage de réduction monté en amont comportent une denture complète, et **en ce que** la denture d'au moins un des pignons centraux (58, 60) comporte un déport de profil, afin de pouvoir compenser la différence de nombre de dents.

19. Boîte épicycloïdale selon une des revendications 16 à 18, **caractérisée en ce que** le premier pignon central (58) comporte un nombre de dents inférieur à celui du deuxième pignon central (60).
